# EUROPEAN PATENT SPECIFICATION

(11) **EP 4 152 282 B1**
(45) Date of publication and mention of the grant of the patent: **02.09.2026**
(21) Application number: 21198136.0
(22) Date of filing: 21.09.2021
(51) Int. Cl.: G07C 5/08, G05D 1/00

(54) **METHOD AND SYSTEM FOR EVALUATION AND DEVELOPMENT OF AUTOMATED DRIVING SYSTEM FEATURES OR FUNCTIONS**
VERFAHREN UND SYSTEM ZUR BEWERTUNG UND ENTWICKLUNG VON EIGENSCHAFTEN ODER FUNKTIONEN EINES AUTOMATISIERTEN FAHRSYSTEMS
PROCÉDÉ ET SYSTÈME D'ÉVALUATION ET DE DÉVELOPPEMENT DES CARACTÉRISTIQUES OU FONCTIONS D'UN SYSTÈME DE CONDUITE AUTONOME

(43) Date of publication of application: 22.03.2023
(73) Proprietor: Zenseact AB, 417 56 Göteborg (SE)
(72) Inventor: GYLLENHAMMAR, Magnus, 435 43 Pixbo (SE); ZANDÉN, Carl, 437 38 Lindome (SE); KHORSAND VAKILZADEH, Majid, 431 66 Mölndal (SE)
(74) Representative: Zacco Sweden AB

(56) References cited:
- US-A1- 2019 324 439
- US-A1- 2020 364 953
- US-A1- 2021 116 256

## Description

### TECHNICAL FIELD

The present disclosure relates to methods and systems for performance evaluation and development of ADS functions or features of a vehicle. In particular, some embodiments relate to an arbitration system for allocating resources for performance evaluation and development of ADS functions or features of a vehicle

### BACKGROUND

During the last few years, the research and development activities related to autonomous vehicles have exploded in number, and many different approaches are being explored. An increasing portion of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. Today, there is ongoing research and development within a number of technical areas associated to both the ADAS and Autonomous Driving (AD) field. ADAS and AD will herein be referred to under the common term Automated Driving System (ADS) corresponding to all of the different levels of automation as for example defined by the SAE J3016 levels (0- 5) of driving automation, and in particular for level 4 and 5.

In a not too distant future, ADS solutions are expected to have found their way into a majority of the new cars being put on the market. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings (i.e. perception). While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

Much of the current efforts for development of ADS features or functions revolves around safely launching a first system to the market. However, once that is achieved it will be paramount to improve the system in a safe and efficient manner, both to achieve cost reductions as well as performance improvements. Generally, there are significant costs associated with the development and verification of safety of the ADS, especially related to field tests and the understanding of how the system behaves in traffic. Therefore, it is desirable to efficiently utilize the available resources on each vehicle, be it a fleet for development purposes (test vehicles) or a fleet of vehicles already launched in the market (production vehicles). An advantage of utilizing production vehicles to develop and/or verify new ADS features (e.g. new perception functions/features) is the large volume of available vehicles (and consequently the large volume of potential training data) as compared to purpose-built test vehicles.

Stated differently, accumulating data for development, evaluation and testing purposes is arguably one of the most cost-intensive parts related to new or updated ADS features/functions. By using vehicles already out on the market (i.e. "production vehicles") to provide this data one can both alleviate the need for dedicated development vehicles as well as make the most of the available resources present in the production vehicle.

Accordingly, it is desirable to be able to utilize the present hardware of the production platform in order to develop new or more performant ADS features using the same sensory outputs as present in the production platform. However, there still are technical challenges that need to be overcome since the production platforms are likely limited in all four of - available power - available computational power - data storage capacity - and available bandwidth for data transmission.

Further, it may be desirable to add new sensors (i.e. new hardware) to some vehicles of the fleet - either through retrofitting or as a part of the original production - to enable the development of new and better perception capabilities of the platform. In view of the technical challenges above, and considering the situation where one wants to enable development of new features based on input from one or even several new HW components simultaneously, the task easily becomes overwhelming.

There is accordingly a need in the art for new solutions for facilitating development and verification of ADS features in order to continuously be able to provide safer and more performant systems.

US 2021/116256 A1 generally relates to methods and systems for assessing, detecting, and responding to malfunctions involving components of autonomous vehicle and/or smart homes. Autonomous operation features and related components can be assessed using direct or indirect data regarding operation. Such assessment may be performed to determine the condition of components for salvage following a collision or other loss-event. To this end, the information regarding a plurality of components may be received. A component of the plurality of components may be identified for assessment. Assessment may include causing test signals to be sent to the identified component. In response to the test signal, one or more responses may be received. The received response may be compared to an expected response to determine whether the identified component is salvageable.

US 2019/324439 A1 discloses systems and methods for implementing a monitoring system for data collection in an industrial environment. The method includes communicatively coupling a plurality of input channels to input sensors and interpreting detection values corresponding to the input channels, wherein the sensor data is acquired from a first group of input channels. The method further includes storing sensor specifications for sensors that correspond to the input channels, evaluating the sensor data with respect to stored anticipated state information including an alarm threshold level, setting an alarm state when the threshold level is exceeded for a first input channel, and changing the input channels being collected to an alternative group of input channels.

US 2020/364953 A1 discloses methods and systems for managing autonomous vehicle data. The method comprises: (a) collecting said autonomous vehicle data from the autonomous vehicle, wherein the autonomous vehicle data has a size of at least 1 terabyte; (b) processing the autonomous vehicle data to generate metadata corresponding to the autonomous vehicle data, wherein the autonomous vehicle data is stored in a database; (c) using at least a portion of the metadata to retrieve a subset of the autonomous vehicle data from the database, which subset of the autonomous vehicle data has a size less than the autonomous vehicle data; and (d) storing or transmitting the subset of the autonomous vehicle data.

### SUMMARY

It is therefore an object of the present invention to provide a method, a computer-readable storage medium, a system, and a vehicle comprising such a system, which alleviate all or at least some of the above-discussed drawbacks of presently known systems and methods.

This object is achieved by means of a method, a computer-readable storage medium, a system, and a vehicle comprising such a system as defined in the appended independent claims. The term exemplary is in the present context to be understood as serving as an instance, example or illustration.

According to a first aspect of the present invention, there is provided a method for prioritized activation of sensor hardware of a vehicle for development, evaluation, and/or testing of ADS features. The method comprises obtaining data indicative of a set of platform constraints of the vehicle, obtaining data indicative of a set of requirements for each of a plurality of ADS features, and obtaining data indicative of a priority scheme for the plurality of ADS features. The priority scheme comprises a predefined development priority of each ADS feature relative to the other ADS features of the plurality of ADS features. The method further comprises obtaining data indicative of a predicted scene or scenario in the surrounding environment of the vehicle that the vehicle is expected to be exposed to at a future moment in time. Then, the method comprises generating, based on the platform constraints, the set of requirements, the priority scheme and the predicted scene or scenario, an arbitration signal indicative of a sensor hardware activation and a resource allocation of the platform of the vehicle for at least one of the plurality of ADS features. Furthermore, the method comprises activating the sensor hardware for data collection in accordance with the generated arbitration signal.

According to a second aspect of the present invention, there is provided there is provided a (non-transitory) computer-readable storage medium storing one or more programs configured to be executed by one or more processors of an processing system (e.g. in-vehicle processing system), the one or more programs comprising instructions for performing the method according to any one of the embodiments disclosed herein. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

In accordance with a third aspect of the present invention there is provided a system for prioritized activation of (non-platform-native) sensor hardware of a vehicle for development, evaluation, and/or testing of ADS features. The system comprises an arbitration module and a control module. The arbitration module is configured to obtain data indicative of a set of platform constraints of the vehicle, obtain data indicative of a set of requirements for each of a plurality of ADS features, and obtain data indicative of a priority scheme for the plurality of ADS features. The priority scheme comprises a predefined development priority of each ADS feature relative to the other ADS features of the plurality of ADS features. The arbitration module is further configured to obtain data indicative of a predicted scene or scenario in the surrounding environment of the vehicle that the vehicle is expected to be exposed to at a future moment in time. Furthermore, the arbitration module is configured to generate, based on the platform constraints, the set of requirements, the priority scheme and the predicted scene or scenario, an arbitration signal indicative of a sensor hardware activation and a resource allocation of the platform of the vehicle for at least one of the plurality of ADS features. The control module is configured to activate the sensor hardware for data collection in accordance with the generated arbitration signal. With this aspect of the invention, similar advantages and preferred features are present as in the previously discussed first aspect of the invention.

According to a fourth aspect of the present invention, there is provided a vehicle comprising a one or more (non-platform-native) sensors configured to monitor a surrounding environment of the vehicle. The vehicle further comprises a system for prioritized activation of (non-platform-native) sensor hardware of a vehicle for development, evaluation, and/or testing of ADS features according to any one of the embodiments disclosed herein. With this aspect of the invention, similar advantages and preferred features are present as in the previously discussed first aspect of the invention.

An advantage of some embodiments is an increase in the utilization of the (limited) production platform resources for development of new ADS features that uses new sensor hardware.

An advantage of some embodiments is that costs associated with the development and validation of a "next generation" platform for autonomous and semi-autonomous vehicles may be decreased due to efficient utilization of the production fleet. Moreover, the need for large amounts of "test vehicles" and associated operating/driving personnel is reduced.

An advantage of some embodiments is that targeted data collection is achievable wherefore the overall amount of data that needs to be stored and transmitted may be reduced (maximization of value of data).

An advantage of some embodiments is that the only scenes/scenarios that are of value for development/evaluation/testing of ADS features are considered wherefore the unnecessary consumption of the production platform resources can be reduced as non-relevant scenes/scenarios are disregarded (targeted data collection).

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the invention will appear from the following detailed description, reference being made to the accompanying drawings, in which:
Fig. 1 is a schematic flowchart representation of a method for prioritized activation of sensor hardware of a vehicle for development, evaluation, and/or testing of ADS features in accordance with some embodiments.
Fig. 2 is a schematic flowchart representation of a method for prioritized activation of sensor hardware of a vehicle for development, evaluation, and/or testing of ADS features in accordance with some embodiments.
Fig. 3 is a schematic process-chart representation of a method for prioritized activation of sensor hardware of a vehicle for development, evaluation, and/or testing of ADS features in accordance with some embodiments.
Fig. 4 is a schematic block diagram representation of a system for prioritized activation of sensor hardware of a vehicle for development, evaluation, and/or testing of ADS features in accordance with some embodiments.
Fig. 5 is a schematic illustration of a clustering-based arbitration in accordance with some embodiments.
Fig. 6 is a series schematic top-view illustrations of a vehicle moving a road portion towards an external object.
Fig. 7 is a schematic side-view of a vehicle comprising a system for prioritized activation of sensor hardware of a vehicle for development, evaluation, and/or testing of ADS features in accordance with some embodiments.

### DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), Field Programmable Gate Arrays (FPGA) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

Collection and curation of data for development, evaluation and testing purposes is arguably one of the most cost-intensive parts of realising performant ADS features. By using vehicles already at the hands of customers (herein referred to as production vehicles) to provide this data, one can both alleviate the need for a large fleet of dedicated development vehicles as well as make the most of the available resources present in the production vehicles (i.e. the production platform). As mentioned, and in addition to the above, it is desirable to add new sensors (i.e. new hardware) to at least some vehicles of the fleet - either through retrofitting or as a part of the original production - to enable the development of new and better perception capabilities of the platform. Therefore, some embodiments disclosed herein provide a solution for deciding which of these "non-platform-native" sensors should be operational and when, in order to optimize the development progress across the sensor and ADS feature portfolio under the constraints of the platform.

Moreover, a large portion of the situations or scenarios that the vehicle is exposed to is not likely to yield any new or relevant information/data to aid the further the development of the algorithms/models used by e.g. the perception system of the ADS. However, ensuring that the situations that are providing relevant information are leveraged may be important in order to achieve an efficient development process of various ADS features, and in particular of ADS perception features (such as e.g. object detection, object classification, free-space estimation, drivable-area estimation, and so forth).

An "ADS feature" or "ADS function" may in the present context be understood as a function or algorithm that provides the control block of the ADS with an interpretation or understanding of the world around the vehicle in a format upon which the control block of the ADS can act. Thus, in some embodiments the "ADS feature" is a perception feature/function such as e.g. an object detection algorithm, an object classification algorithm, a free-space estimation algorithm, a lane tracking algorithm, a road edge tracking algorithm, an object motion-prediction algorithm, a free-space estimation algorithm, drivable-area estimation algorithm, and so forth. "Free-space estimations" may be understood as a determination of free-space areas i.e. estimates of areas absent of external objects (static and dynamic objects). One can consider an estimation of "driveable area" in an analogous fashion, where in addition to the estimation of areas absent of objects (as in the case of free space) the "driveable area" estimation also includes the presence of a road surface. However, in some embodiments, an "ADS feature" may be a sensor software directly linked to the sensor hardware, such that the "development or evaluation of an ADS feature" may be with the purpose of improving sensor reliability.

Some embodiments provides a means to increase the efficiency in the development of various ADS features that are based on "new" sensor hardware (i.e. non-platform-native sensor hardware) under the constraints of the production platform. An example case would be if the production platform is updated with a new type of sensor (e.g. a new LiDAR device) wherefore a need for new/updated ADS features arises that can utilize the output from this new type of sensor to further expand the capabilities of the ADS. In particular, some embodiments provide methods and systems for modularised development (e.g. evaluation and learning/training) for the applicable ADS features to leverage the production platform in an efficient and effective manner, with respect to the development needs of the ADS features, whilst accounting for the limitations of the platform.

Accordingly, some embodiments herein provide a modularised architecture/platform for evaluation and/or learning of ADS features to be done in open loop (either in the vehicle directly - also known as shadow-mode) or retroactively if the input data is available. In more detail, the architecture or platform effectively provides decisions for activating and deactivating one or more non-platform-native sensors in order to provide the proposed modular development of ADS features that require such input data (i.e. data originating from one or more non-platform-native sensors). However, such ADS features need not be restricted to that type of input data but may further also require input data in the form of sensor output from platform-native sensors.

In short, the herein proposed architecture uses the platform constraints, the priorities between the ADS features as well as their development requirements as "input data" together with the predicted future conditions to which the ADS/vehicle will be exposed. This input data is processed so to deliver a set of decisions including a decision on which development task should be run for which feature and when. For example, to decide if the sensor output be stored or if an in-vehicle evaluation or learning cycle should be conducted. This set of decisions is subsequently consolidated to decide which of the sensor(s) are needed to be active. Once these decisions are enacted the arbitration system may be updated according to which ADS feature were exposed to which conditions, so to make sure that continuous progress can be made for each ADS feature. Accordingly, the herein proposed architecture enables for modular development of new ADS features dependent on new HW.

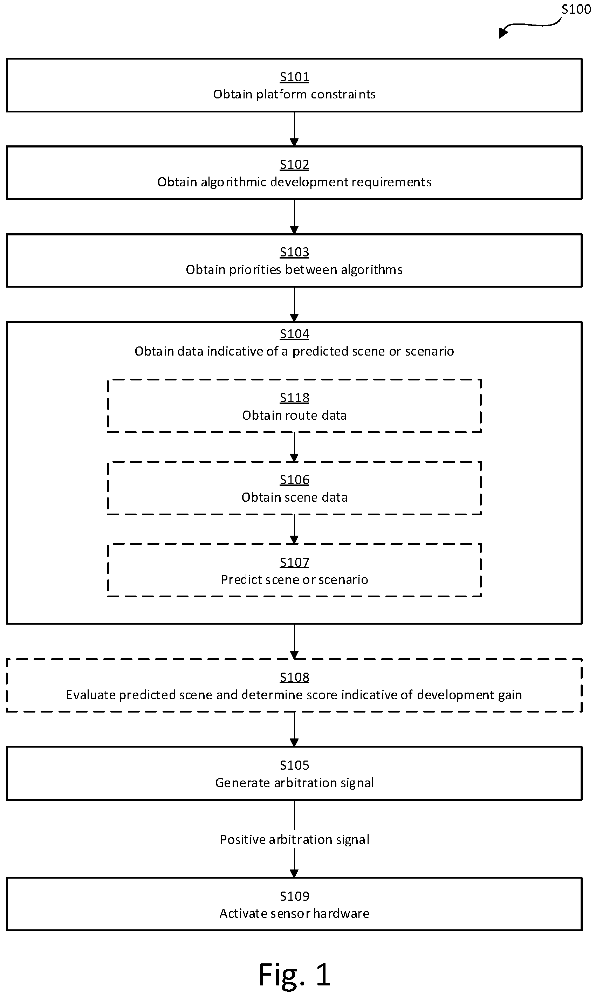

Fig. 1 is a schematic flowchart representation of a method S100 for prioritized activation of sensor hardware of a vehicle for development, evaluation, and/or testing of ADS features. In particular the method S100 is suitable for prioritized activation of non-platform-native (i.e. new) sensor hardware of a vehicle for development, evaluation, and/or testing of ADS features.

The method S100 comprises obtaining S101 data indicative of a set of platform constraints of the vehicle. In accordance with some embodiments, the set of platform constraints include at least one of, available power, available computational power, available data storage capacity, and available bandwidth for data transmission.

In general, the term "data indicative of" some information, may be understood as - "data comprising" that information - "data relating to" that information but based on which the information can be derived - or data in the form of a pointer towards a source from which that <information> can be retrieved.

Further, the method S100 comprises obtaining S102 data indicative of a set of requirements for each of a plurality of ADS features. In accordance with some embodiments, the set of requirements for each of the plurality of ADS features comprises an estimated power consumption, an estimated computational resource need, an estimated data storage need, and an estimated bandwidth need. Thus, "the set of requirements" for an ADS feature may be understood as "the set of algorithmic development requirements".

Still further, the method S100 comprises obtaining S103 data indicative of a priority scheme for the plurality of ADS features. The priority scheme comprises a predefined development priority of each ADS feature relative to the other ADS features of the plurality of ADS features.

The method S100 further comprises obtaining S104 data indicative of a predicted scene or scenario in the surrounding environment of the vehicle that the vehicle is expected to be exposed to at a future moment in time. A "scenario" may be understood as a temporal development of a plurality of "scenes", or alternatively formulated as a series of consecutive "scenes". In general, "a future moment in time" may be in some seconds (e.g. 1 - 59 seconds) from a current moment in time, or some minutes (e.g. 1- 20 minutes) from a current moment in time. Moreover, "a future moment in time" is in accordance with some embodiments a future moment in time within a current driving session.

In some embodiments, the step of obtaining S104 data indicative of a predicted scene or scenario comprises obtaining S118 route data indicative of a geographical position of the vehicle at the future point in time. Thus, the route data may comprise a planned route of the vehicle as provided from a navigation system of the vehicle.

The step of obtaining S104 data indicative of a predicted scene or scenario comprises may further comprise obtaining S106 scene data indicative of at least one of a weather forecast, a time of day, a traffic condition, and an environmental condition at the geographical position at the future moment in time. A "traffic condition" may for example be a density of traffic (e.g. traffic jam, dense traffic (rush-hour traffic), light traffic). An "environmental condition" may for example be presence of road barriers, a number of lanes, presence of merging lanes, and so forth.

Moreover, the step of obtaining data indicative of a predicted scene or scenario may further comprise predicting S107 the scene or scenario in the surrounding environment of the vehicle that the vehicle is expected to be exposed to at the future moment in time based on the obtained S118 route data and the obtained S106 scene data. In other words, the predicted scene or scenario may be understood as a set of predicted conditions made up by a relevant set of metrics such as the planned route and which road conditions will be traversed as well as the predicted weather and traffic conditions.

Accordingly, the data indicative of a predicted scene or scenario may be understood as a set of predicted conditions that the vehicle is expected to be exposed to at the future moment in time (e.g. in 30 seconds from now). For example, the route data may indicate that the vehicle is expected to be driving on specific portion of a motorway or controlled-access highway 30 seconds from a current moment in time. Moreover, the scene data may indicate that the weather forecast for that portion of the motorway is rain, and the time of day may indicate that the vehicle will be traveling at night (i.e. at low lighting conditions) at the future moment in time.

In some embodiments, the method S100 further comprises evaluating S108 the predicted scene or scenario in order to determine a score indicative of a potential development gain of using at least a portion of output data generated by the activated sensor hardware at the predicted scene or scenario as input for each of the plurality of ADS features. In more detail, the potential development gain may be derived from comparing the predicted scene or scenario (i.e. predicted conditions) with a set of "relevant evaluation conditions" for each ADS feature.

In some embodiments, the set of relevant evaluation conditions are based on previously collected data that has been used for developing an ADS feature (i.e. sensor data that the ADS feature has been exposed to), together with predefined specifications and a predefined operational design domain (ODD) of the ADS feature. Furthermore, the set of relevant evaluation conditions may be further limited by the operating conditions specific for the type of sensor hardware. In other words, the "relevant evaluation conditions" for an ADS feature indicate a need for a specific content in the output data generated by the activated sensor hardware in order to be able to evaluate the performance of the ADS feature and/or to update the ADS feature in an optimized manner. Operational design domain (ODD) is to be understood as a description of the operating conditions in which an automated or a semi-automated driving system (i.e. AD or ADAS) is designed to function, including, but not limited to, geographic, roadway (e.g. type, surface, geometry, edges and markings), environmental parameters, connectivity, surrounding objects, traffic parameters, and speed limitations. Thus, going along with the illustrative example above, where the predicted scene or scenario indicates that the vehicle will be driving on a motorway during the night in rainy conditions. Then, assuming that the "relevant evaluation conditions" of a first ADS feature indicate that the first ADS feature would greatly benefit from being exposed to those conditions, a high score of potential development gain is determined for the first ADS feature. However, the "relevant evaluation conditions" of a second ADS feature indicate dense city-traffic at low speed and with bright lighting conditions. In other words, rain at night is outside of the ODD of the second ADS feature. Accordingly, one may determine a lower score of potential development gain for the second ADS feature relative to the score of potential development gain of the first ADS feature. Moreover, there are further parameters (as already exemplified with respect to the route and scene data in the foregoing) that could be used for determining the potential development gain of an ADS feature in the present context. However, these are considered to be readily understood by the skilled person in the art, and will for the sake of brevity and conciseness not be elaborated upon in explicit detail. In general, data is considered to be valuable (i.e. associated with a high development gain) if the data has not been collected with that sensor hardware before and if it inside the specification/ODD of that ADS feature and the sensor hardware.

Moreover, in some embodiments the step of evaluating S108 the predicted scene or scenario is performed by means of a heuristic algorithm (i.e. a rule-based algorithm). In more detail, by setting up a specific set of rules (either general or specific for each ADS feature) one can efficiently evaluate the predicted scenario in view of the relevant evaluation conditions for each ADS feature.

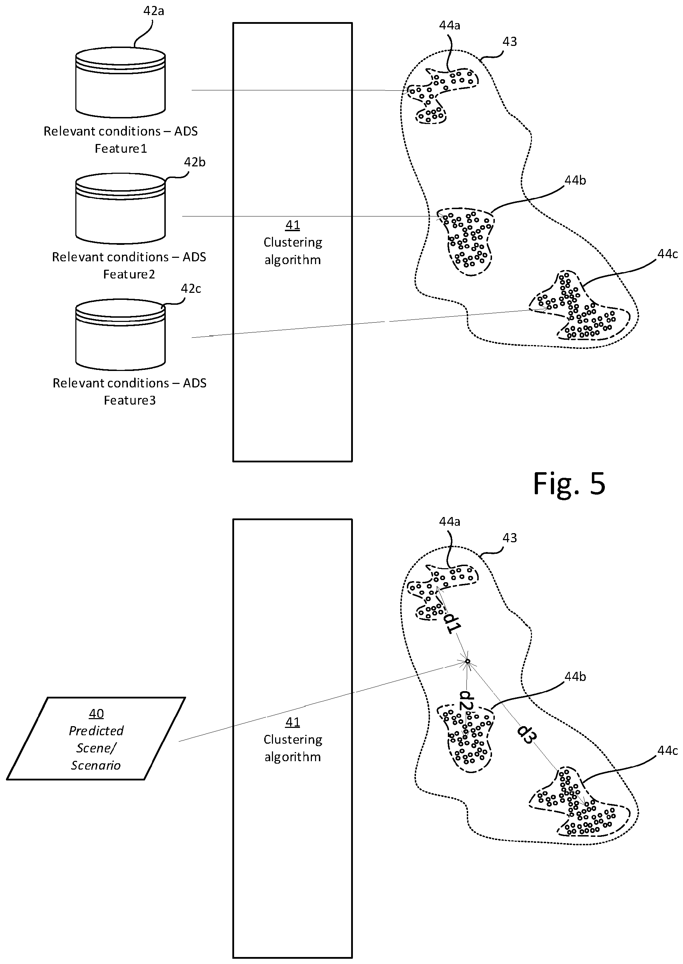

Further, in some embodiments, the step of evaluating S108 the predicted scene or scenario is performed by means of a clustering algorithm. An example of a clustering-based arbitration in accordance with some embodiments is schematically depicted in Fig. 5.

The top part of Fig. 5, illustrates how the clustering algorithm 41 is configured to cluster the relevant evaluation conditions 42a-c of each ADS feature. As mentioned, the relevant evaluation conditions 42a-c may be modelled/acquired from previously collected sensor data utilized to develop the ADS feature together with predefined specifications and a predefined operational design domain of the ADS feature. The clustering algorithm 41 may be any suitable algorithms as readily understood by the skilled person in the art such as e.g., a K-means clustering algorithm, a mean-shift clustering algorithm, a Density-Based Spatial Clustering of Applications with Noise (DBSCAN) clustering algorithm, and so forth.

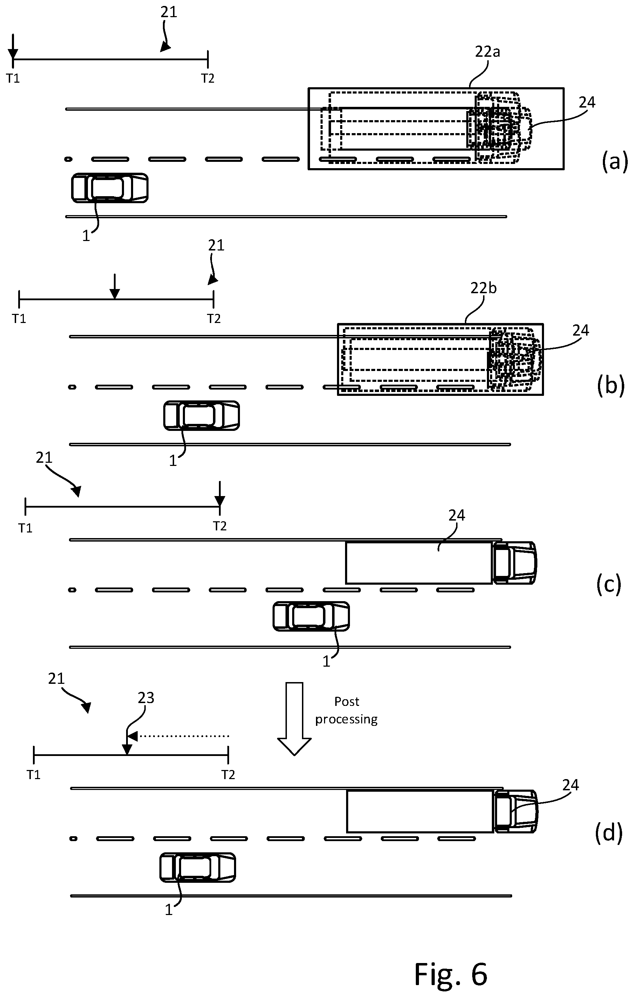

Once the clustering algorithm 41 has formed the "training clusters" (may also be referred to as sub-clusters) 44a-c for the plurality of ADS features, it can process a predicted scene or scenario 40 and place it in the same "cluster space" 43. Then, in some embodiments, the score indicative of the potential development gain is determined based on a position of the placed predicted scene or scenario 40 in the clustering space relative to each sub-cluster 44a-c (see bottom part of Fig. 6). In other words, the distances d1-d3 may be used to determine the score indicative of the potential development gain, where a smaller distance indicates a higher development gain than a larger distance.

In other words, the step of evaluating the current scene or scenario may accordingly comprise processing, by means of the clustering algorithm 41, the predicted scene or scenario 40 in order to place the predicted scene or scenario 40 in a clustering space 43. The clustering space is indicative of sub-clusters (training clusters) 44a-c formed based on a set of predefined evaluation conditions for each ADS feature of the plurality of ADS features. Further, the method may comprise determining the score indicative of the potential development gain based on a position of the placed predicted scene or scenario in the clustering space 43 relative to each sub-cluster 44a-c.

Reverting to Fig. 1, the method S100 further comprises generating S105 based on the platform constraints, the set of requirements, the priority scheme and the predicted scene or scenario, an arbitration signal indicative of a sensor hardware activation and a resource allocation of the platform of the vehicle for at least one of the plurality of ADS features.

However, as mentioned, the method S100 may further comprise evaluating S108 the predicted scene or scenario in order to determine a score indicative of a potential development gain for each ADS feature. Accordingly, in some embodiments, the arbitration signal indicative of the sensor hardware activation and resource allocation is generated S105 further in accordance with the determined "development gain score" and the priority scheme.

Further, in some embodiments, the method S100 further comprises activating S109 the sensor hardware in accordance with the arbitration signal. In other words, once a "positive" arbitration signal is received, the sensor hardware indicated in the arbitration signal is activated S109.

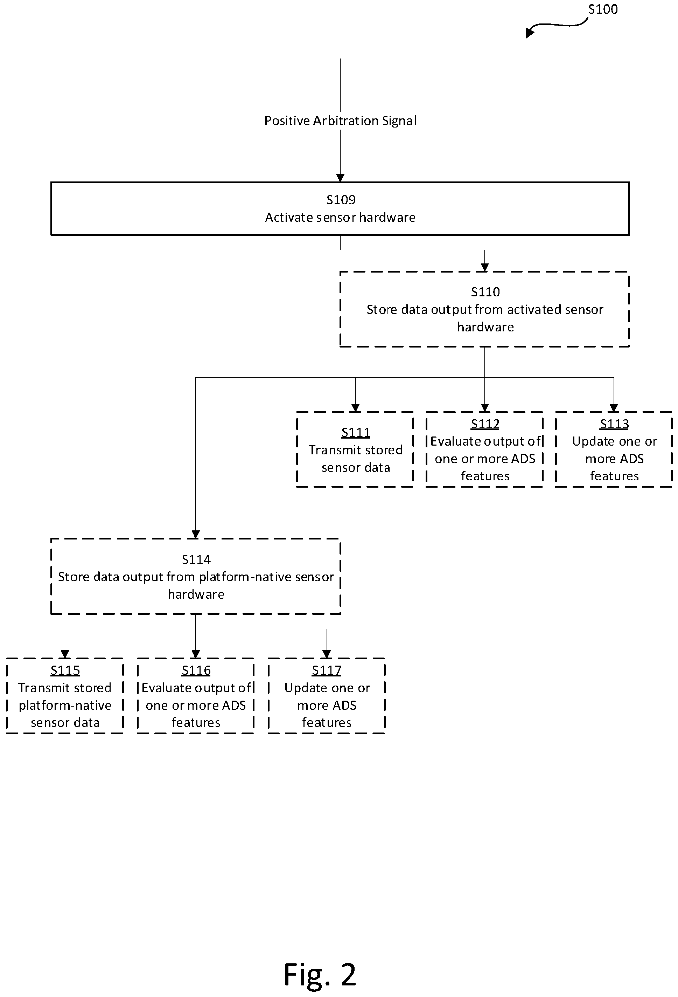

Turning to Fig. 2, which is a continuation of the flowchart representation of a method S100 for prioritized activation of sensor hardware of a vehicle for development, evaluation, and/or testing of ADS features depicted in Fig. 1. In more detail, Fig. 2 illustrates some example embodiments with method/process steps that occur after the sensor hardware activation S109.

Accordingly, in accordance with some embodiments, once the sensor hardware has been activated, the method S100 may further comprise storing, during a time period, a first set of sensor data generated by the activated sensor hardware. Then, based on the resource allocation indicated by the arbitration signal, the method S100 may further comprise at least one of:
- Transmitting S111 at least a portion of the first set of sensor data to a remote entity for offline processing.
- Evaluating S112, in accordance with the resource allocation, an output of at least one ADS feature using at least a portion of first set of sensor data as input.
- Updating S113, in accordance with the resource allocation, at least one ADS feature using at least one portion of the first set of sensor data as input.

Further, in accordance with some embodiments, the method S100 comprises storing S114, during a time period, a second set of sensor data generated by platform-native sensors of the vehicle. Then, based on the resource allocation indicated by the arbitration signal, performing at least one of:
- Transmitting at least a portion of the second set of sensor data to a remote entity for offline processing.
- Evaluating, in accordance with the resource allocation, an output of at least one ADS feature using at least a portion of second set of sensor data as input.
- Updating, in accordance with the resource allocation, at least one ADS feature using at least one portion of the second set of sensor data as input.

The term "sensor data" is herein to be interpreted broadly, and may comprise raw sensor data and/or processed sensor data (e.g. object-level data) obtained from a perception module 125 of the ADS (i.e. perception data). In other words, the stored sensor data may for example be detected objects or objects' states and/or vehicle localization, and/or statistical and physical model predictions of future states, derived continuously and/or intermittently from a first time point T1 to a second time point T2. The sensor data may be stored in a data storage device, such as a data buffer. The time period - and correspondingly the length of the optional data buffer - may be of any arbitrary size deemed feasible, e.g. in consideration of data capacity restraints and/or characteristics of the ADS, and may for instance range from under a second up to several minutes, or more preferred, from a few seconds up to less than a minute.

The term "storing" a range of data may refer to "storing in one or more memories", "storing on-board said vehicle", "storing in one or more memories on-board said vehicle", and/or "storing digitally and/or electronically" a range of data, and further to "collecting" and/or "obtaining" a range of data. The term "range" of data, on the other hand, may refer to "amount", "series", "continuous and/or intermittent flow" and/or "collection" of data, whereas "data" may refer to "continuously and/or intermittently collected data". Furthermore, the term "perception" data may refer to "surroundings assessment" data, "sensory" data and/or "temporal dependencies" data, whereas "data" may refer to "information" and/or "estimates". The phrase storing "during" a time period may refer to storing "for" a time period, whereas time period "ranging" from a first time point to a second time point may refer to time period "extending" and/or "taking place" from a first time point to a second time point. "Time period" may refer to "predeterminable time period" and/or "predetermined time period". "Time point", on the other hand, may refer to "point in time", whereas "from a first time point to a second time point" may refer to "from a first time point to a subsequent second time point

Further, depending on the type of ADS feature that is being developed, it will require different sets of platform resources. Moreover, ADS features, e.g. ADS perception features/functions, targeting improvements (e.g. in terms of computational footprint, execution time, etc.) of detection abilities present in the production platform may be evaluated and/or updated online (i.e. in the vehicle). On the other hand, some ADS features require training data that cannot be "annotated" by comparison with the production outputs and will therefore require off-board processing in order to update the ADS features. However, these may nevertheless be evaluated online by deriving a performance metric using the production outputs.

Thus, there are herein proposed three different possible tracks for an ADS feature - (1) transmission of data for off-board processing and off-board updating - (2) online evaluation - and (3) online updating e.g. in accordance with a federated learning scheme. Additionally, in (2) one could consider - (i) only sending the evaluation results - or (ii) sending the entire input data (used in the evaluation) for off-board processing if e.g. a certain threshold is met in the evaluation. Moreover, in some embodiments, the ADS features discussed herein are limited to ADS features that require the output from a non-platform-native sensor (i.e. the "activated S109 sensor hardware). However, the ADS features need not be restricted to solely rely on this type of input, but may further utilize sensor data generated by the production-platform.

In reference to the "second track" mentioned in the foregoing, the evaluation process may for example be conducted in accordance with the teachings of European Patent Application No. EP19204278.6, titled "PERFORMANCE MONITORING AND EVALUATION OF A VEHICLE ADAS OR AUTONOMOUS DRIVING FEATURE", incorporated herein by reference. Moreover, the online updating process may for example be conducted in accordance with the teachings of European Patent Application No. EP21158017.0 titled "PLATFORM FOR PERCEPTION SYSTEM DEVELOPMENT FOR AUTOMATED DRIVING SYSTEMS", incorporated herein by reference.

In short, for the evaluation process the output of the evaluated ADS feature is compared with a "production ground truth" (may also be referred to as a "baseline worldview"), i.e. a post-processed version of the ADS worldview. The "third track" mentioned in the foregoing (i.e. updating process) is based on a similar approach, where the post-processed worldview, i.e. the "production ground truth" or "baseline worldview" may be used as "annotated" data or a supervisory signal in a self-supervised training scheme. The post-processing is further elucidated and exemplified in reference to Fig. 6. The term "worldview" may be understood as the perception output from the ADS, i.e. data comprising a representation of the surrounding environment of the vehicle that based on sensor data and various algorithms/models configured to process the sensor data into scene understanding.

More specifically, Fig. 2 depicts a series (a) - (d) of schematic top-view illustrations of a vehicle 1 moving a road portion towards an external object 24. Each illustration is associated with a point in time within the time period 21 ranging from a first moment in time T1 to a second moment in time T2.

In the first illustration (a) the vehicle 1 (may also be referred to as ego-vehicle 1) is moving towards an external object, here in the form of a truck 24, that is traveling in the same direction on an adjacent lane on the road portion. However, due to the distance to the truck 24, the vehicle's perception system/module may not be able to determine, with a sufficiently high level of accuracy, the position of the external object, and to classify it as a truck. This is indicated by the box 22a enclosing the truck 24 and the "blurred" representation of the truck 24, which serve to schematically indicate the "uncertainties" of the detection and classification.

At a subsequent moment in time, i.e. illustration (b) of Fig. 2, the vehicle 1 is closer to the external object, and the uncertainties regarding the external object's 24 position and class/type are reduced, as indicated by the reduced size of the box 22b and the converging "blur" as compared to the situation in illustration (a).

At yet another subsequent moment in time, i.e. illustration (c) of Fig. 2, the vehicle's 1 perception system/module is able to accurately determine the external object's 2 position and classify it as a truck 2. More specifically, the ego-vehicle 1 is now sufficiently close to the truck 2 to be able to classify it and estimate the truck's position on the road with a higher level of accuracy as compared to when the ego-vehicle 1 was located further away from the truck.

Then, by means of a suitable filtering technique and based on the temporal development of the "scenario", one is able to establish a "worldview" at an intermediate point 23 in time between T1 and T2, as indicated in the bottom illustration in Fig. 2, i.e. in illustration (d) of Fig. 2. In more detail, the filtering may for example be based on the temporal development of the trajectories, positions, etc. in combination with predefined models (e.g. motion models) of the vehicle 1 and external objects 2. This established worldview may subsequently used as a "ground truth" for training and/or validation of various perception output, and in particular for training and/or validation of the output obtained from one or more ADS features herein. Thus, in some embodiments, the post-processed worldview forms a ground truth for the output of the ADS feature(s).

In accordance with some embodiments, the time period ranges from a first time point to a second time point, and the perception data output by the perception system of the ADS is stored during the time period. Accordingly, the step of post-processing perception data may comprise determining, based on post-processing a portion of the perception data ranging back from the second time point to an intermediate time point between the first time point T1 and second time point T2 the training data indicative of the surrounding environment of the vehicle (e.g. from a bird's eye view perspective). The post-processed perception data is accordingly conditional on the portion of the perception data. Moreover, in accordance with some embodiments, the post-processing of the portion of the perception data comprises running the portion of the perception data through a backwards filter. Here, the backwards filter is configured to align a set of perceptive parameters of the perception data at the intermediate time point based on a development of the state(s) of the set of perceptive parameters from the intermediate time point to the second time point T2. The term "perceptive parameters" may for example include one or more of object classes, object positions/bounding boxes, road edge estimations, road geometry estimations, etc.

In other words, with the increased knowledge of vehicle 1 surroundings as time passes from the intermediate time point 23 to the second time point T2 and by analyzing data in reverse temporal direction, one may be able to determine, with a higher level of accuracy, the "state" (i.e. classes, positions, trajectories, etc.) of the objects in the vehicle's 1 surroundings at the intermediate time point, than it was able to do at "run-time". In more detail, the post processing may for example comprise running the perception data through a backwards filter configured to align e.g. the objects current and predicted future states with what happened in the future - i.e. from the intermediate time point to the second time point T2. The post-processing may include further processing steps than running it through a backwards filter. More specifically, the post-processing may include fusion of data from various sensors, as well as applying backward and forward filtering on the fused information. Suitable filters for this purpose may for example be Particle filters or different types of Kalman filters (e.g. extended Kalman filters).

Accordingly, when the post-processed worldview has been obtained for a specific time period, one can compare a corresponding output, i.e. an output from a subject ADS feature that is at least partly based on data from the activated sensor hardware originating from the same time period. However, the post-processing of perception data is not an essential requirement for performing the evaluation or update process, as in some cases it is enough to just use the output from the production platform's perception module/system as a comparison with the subject ADS feature's output.

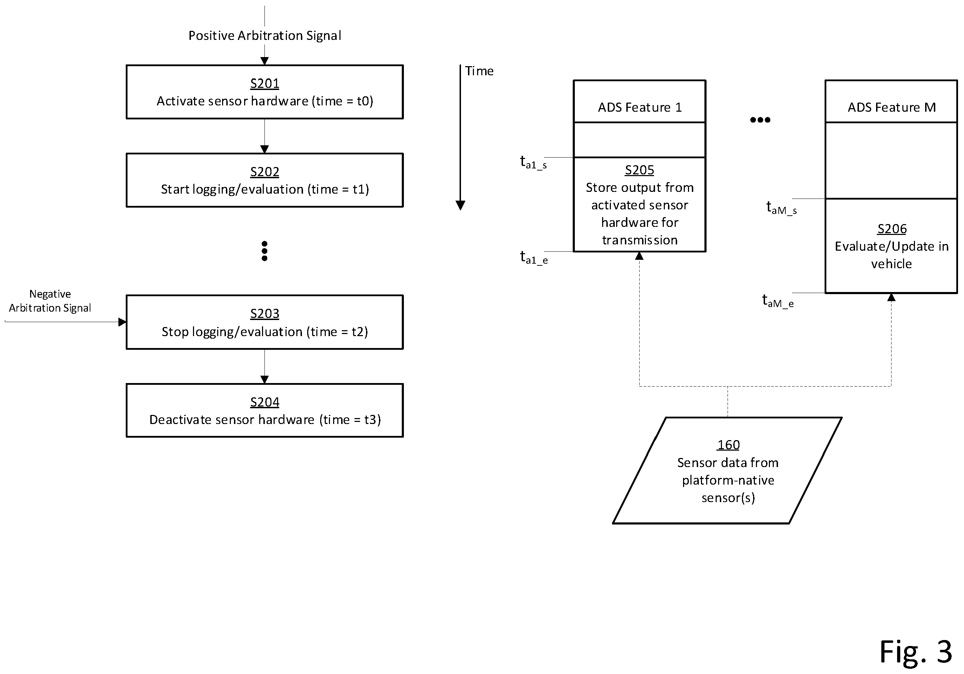

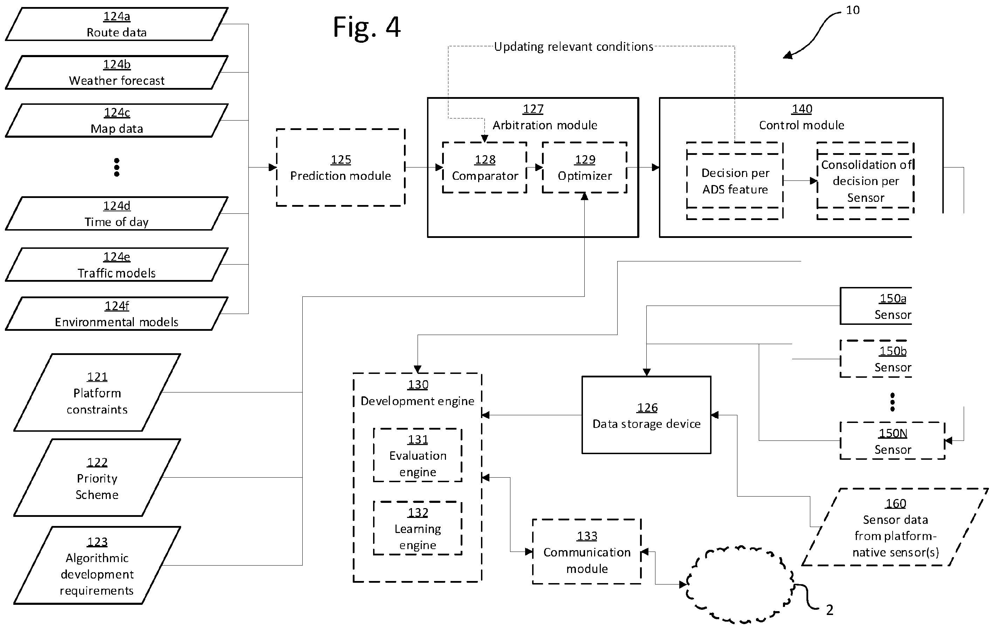

Moving on, Fig. 3 is a schematic process chart illustrating a method for prioritized activation of sensor hardware of a vehicle for development, evaluation, and/or testing of ADS features in accordance with some embodiments. In more detail, Fig. 4 shows the process flow from when a positive arbitration signal is received for a specific (non-platform-native) sensor until a negative arbitration signal is received. Here, the arbitration signal is considered to indicate that the specific sensor hardware should be activated S201 at time t₀. Furthermore, the arbitration signal indicates that the logging/evaluation should be started S201 at time t₁, be stopped S203 at time t₂, followed by a deactivation S204 of the sensor hardware at time t₃.

Moreover, since there could be several ADS features that utilize the same sensor output data as input, one may determine this time-period (between t₀ and t₃) based on the need of each affected ADS feature. In other words, each ADS feature is allocated some platform resources at specific time slots (see e.g. t_{a1_s} to t_{a1_e}, t_{a2_s} to t_{a2_e} and t_{aM_s} to t_{aM_e}) and the duration of the "activation time" of the sensor may be derived from these allocated time slots. Here, "s" and "e" are used to indicate "start" and "end", respectively. Thus, in some embodiments, the arbitration signal is further indicative of one or more time slots where one or more ADS features are allocated platform resources.

As mentioned in the foregoing, the resource allocation indicated by the arbitration signal may further control whether a specific ADS feature is allocated platform resources for transmitting S205 sensor output to a remote entity or for evaluating/updating S206 the ADS feature online (i.e. in the vehicle).

Executable instructions for performing these functions are, optionally, included in a non-transitory computer-readable storage medium or other computer program product configured for execution by one or more processors.

Fig. 4 is a schematic block diagram representation of a system 10 for prioritized activation of sensor hardware of a vehicle for development, evaluation, and/or testing of ADS features. The system 10 uses the platform constraints 121, the development priorities 122 between the ADS features and the algorithmic development requirements 123 for each ADS feature, together with predicted scene/scenario that the vehicle will be exposed to as inputs to an arbitration module 127. The predicted scene/scenario may be generated by a prediction module 125 and may be in the form of a set of predicted conditions of the surrounding environment that the vehicle will be exposed to at a future moment in time. Further, these inputs are then processed by the arbitration module 127 in order to deliver a set of decision including:
- A decision of what development task (data transmission, evaluation, updating) should be run for which ADS feature.
- A decision of what time (e.g. in the form of allocated time slots) should the development task be run for each ADS feature.
- A decision of which sensor hardware 150a-N should be activated at what time (e.g. in the form of allocated time slots).

These decisions may be indicated by the arbitration signal generated at an output of the arbitration module 27 and subsequently provided as input to a control module 140. This control module 140 is configured to consolidate these decisions (per feature) so to decide which sensors 150a-N are needed to be active. Accordingly, the control module 140 is configured to activate the sensor hardware 150a-N in accordance with the generated arbitration signal.

As readily understood by the skilled artisan, the modules and engines as disclosed herein may comprise any suitable hardware and/or software components for performing the functions described. In more detail, the modules and engines may comprise one or more processors and one or more memories coupled to the one or more processors, wherein the one or more memories store one or more programs that perform the specific steps, services and functions disclosed herein when executed by the one or more processors.

In more detail, the prediction module 125 may be configured to obtain route data 124a indicative of a geographical position of the vehicle at the future point in time. Moreover, the production module 125 may be configured to obtain scene data indicative of at least one of a weather forecast 124b, map data 124c, a time of day 124d, one or more traffic conditions 124e, and one or more environmental conditions 124f at the geographical position at the future moment in time. The prediction module 125 may be further configured to predict the scene or scenario in the surrounding environment of the vehicle that the vehicle is expected to be exposed to at the future moment in time based on the obtained route data 124a and scene data 124b-f.

In the depicted example embodiment of Fig. 4, the arbitration module comprises two components, namely a comparator 128 and an optimizer 129. The comparator 128 is configured to compare the predicted conditions (i.e. the predicted scene/scenario) with the relevant evaluation conditions of each ADS feature. The optimizer 129 is configured to provide an optimized arbitration decision based on output from the comparator 128 together with the platform constraints 121, the priority scheme 122, and the set of development requirements 123. Furthermore, once the decisions of the arbitration module 127 have been enacted, the evaluation conditions for each ADS feature may be fed back to the arbitration module 127, and more specifically, to the comparator 128 in order to update the relevant evaluation conditions for each ADS feature based on the enacted decisions. For example, if an ADS feature was just exposed to an update process based on sensor data in rainy conditions, then the "need" for further training data in rainy conditions may be reduced. Thereby the "relevant evaluation conditions" may be kept up-to-date and the overall efficiency of the system 10 may be further increased.

As mentioned, the comparator 128 may be realized, for example, through a clustering of the relevant evaluation conditions modelled for each ADS feature. Thus, in some embodiments the comparator comprises a clustering algorithm configured with the modelled "relevant evaluation conditions". Then, by using the position of the predicted conditions (i.e. predicted scene/scenario) within the formed clustering space the comparator may be configured to determine a distance from the position of the predicted conditions to the relevant evaluation condition for each feature. This is accordingly, on example embodiment, of achieving a discriminative measure between the different features with respect to which one would have most use of being evaluated in the predicted conditions.

Further, the control module 140 may be configured to store, during a time-period, a first set of sensor data generated by the activated sensor hardware 150a-N. Moreover, in accordance with some embodiments, the system 10 further comprises a development engine/module 130 configured to perform a data transmission, evaluation, and/or update process in accordance with the resource allocation indicated by the arbitration signal. In more detail, the development engine/module 130 may comprise an evaluation engine/module 131 configured to evaluate, in accordance with the resource allocation, an output of at least one ADS feature using at least a portion of stored first set of sensor data as input. Moreover, the development engine/module 130 may comprise a learning engine/module 132 configured to update, in accordance with the resource allocation, at least one ADS feature using at least one portion of the stored first set of sensor data as input. Furthermore, in some embodiments, the control circuitry is configured to transmit at least a portion of the stored first set of sensor data to a remote entity for offline processing. By transmitting the data to a remote entity (e.g. a back-office or fleet management system), the stored first set of sensor data may be manually annotated and then utilized in a central updating process of the affected ADS feature(s). The transmission of data may for example be performed by a communication module 133 via an external communication network, such as a cellular network (e.g. 4G, NR/5G).

In some embodiments, the control module 140 may be configured to store, during a time period, a second set of sensor data 160 generated by platform-native sensors of the vehicle (i.e. by the "production sensors" of the vehicle). Moreover, in accordance with some embodiments, the development engine/module 130 is configured to perform a data transmission, evaluation, and/or update process in accordance with the resource allocation indicated by the arbitration signal using the second set of sensor data 160. In more detail, the evaluation engine/module 131 may be configured to evaluate, in accordance with the resource allocation, an output of at least one ADS feature using at least a portion of stored second set of sensor data 160 as input. Moreover, the learning engine/module 132 may be configured to update, in accordance with the resource allocation, at least one ADS feature using at least one portion of the stored second set of sensor data 160 as input. Furthermore, in some embodiments, the control circuitry is configured to transmit at least a portion of the stored second set of sensor data 160 to a remote entity for offline processing.

As mentioned, the ADS features discussed herein are limited to ADS features that require the output from a non-platform-native sensor 150a-N. However, the ADS features need not be restricted to solely rely on this type of input, but may further utilize sensor data 160 generated by the production-platform.

The sensor data may be stored in a data storage device 126, such as a data buffer. The time period - and correspondingly the length of the optional data buffer - may be of any arbitrary size deemed feasible, e.g. in consideration of data capacity restraints and/or characteristics of the ADS, and may for instance range from under a second up to several minutes, or more preferred, from a few seconds up to less than a minute.

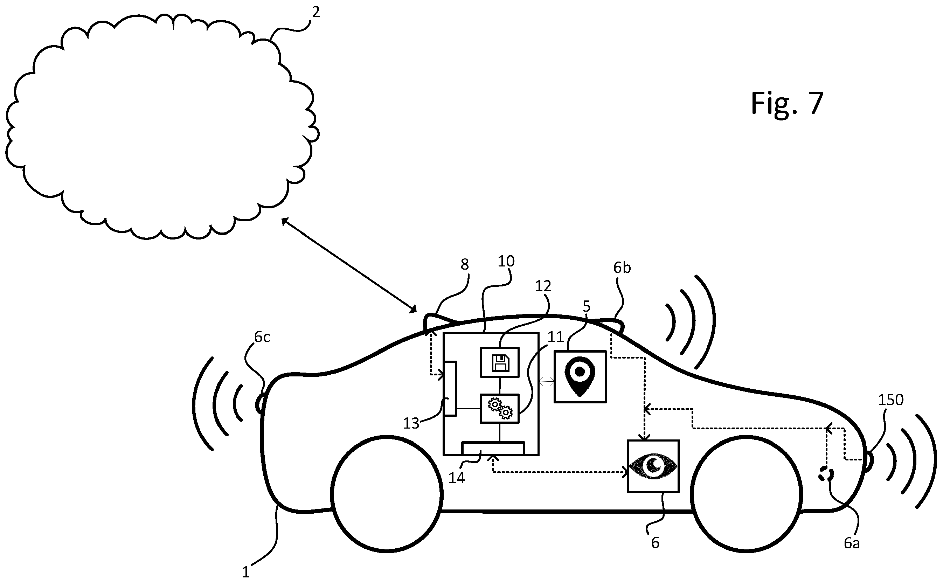

Fig. 7 is a schematic side-view illustration of a vehicle 1 comprising a system 10 for prioritized activation of sensor hardware of a vehicle for development, evaluation, and/or testing of ADS features in accordance with any one of the embodiments disclosed herein. The vehicle 1 further comprises a perception system 6 (may also be referred to as perception module or perception block) and a localization system 5. A perception system 6 is in the present context to be understood as a system responsible for acquiring raw sensor data from on-board sensors 6a, 6b, 6c, 150 such as cameras, LIDARs and RADARs, ultrasonic sensors, and converting this raw data into scene understanding. Here, the sensors 6a, 6b, 6c may be referred to as "platform-native sensors" while the sensor 150 may be referred to as a non-platform-native sensor as defined in the foregoing. The localization system 5 is configured to monitor a geographical position and heading of the vehicle, and may in the form of a Global Navigation Satellite System (GNSS), such as a GPS (or any other regional variant thereof). However, the localization system may alternatively be realized as a Real Time Kinematics (RTK) GPS in order to improve accuracy.

In more detail, the perception system/block 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c, 150 comprised in and/or provided on-board the vehicle 1. The surrounding detecting sensors 6a-c, 150 may be represented by any arbitrary sensors adapted to sense and/or perceive the vehicle's 1 surroundings and/or whereabouts, and may e.g. refer to one or a combination of one or more of radar, LIDAR, sonar, camera, odometer and/or inertial measurement units.

The system 10 comprises one or more processors 11, a memory 12, a sensor interface 13 and a communication interface 14. The processor(s) 11 may also be referred to as a control circuit 11 or control circuitry 11. The control circuitry 11 is configured to execute instructions stored in the memory 12 to perform a method for prioritized activation of sensor hardware of a vehicle for development, evaluation, and/or testing of ADS features according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

Further, the vehicle 1 may be connected to external network(s) 2 via for instance a wireless link (e.g. for retrieving map data, "global" updates of one or more ADS features, or updates of any schemes/requirements associated with the ADS features). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 and arbitration module (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly from the sensors 6a-c, 150 or via dedicated sensor control circuitry 6 in the vehicle. The communication/antenna interface 13 may further provide the possibility to send output to a remote location (e.g. remote operator or control centre) by means of the antenna 8. Moreover, some sensors in the vehicle may communicate with the system 10 using a local network setup, such as CAN bus, I2C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data or perception data may be sent to an external system and that system performs the steps to evaluate the current scene or scenario. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method (S100) for prioritized activation of sensor hardware of a vehicle for development, evaluation, and/or testing of Automated Driving System, ADS, features, the method comprising:
obtaining (S101) data indicative of a set of platform constraints of the vehicle;
obtaining (S102) data indicative of a set of requirements for each of a plurality of ADS features;
obtaining (S103) data indicative of a priority scheme for the plurality of ADS features, wherein the priority scheme (122) comprises a predefined development priority of each ADS feature relative to the other ADS features of the plurality of ADS features;
obtaining (S104) data indicative of a predicted scene or scenario in the surrounding environment of the vehicle that the vehicle is expected to be exposed to at a future moment in time;
generating (S105), based on the platform constraints, the set of requirements, the priority scheme and the predicted scene or scenario, an arbitration signal indicative of a sensor hardware activation and a resource allocation of the platform of the vehicle for at least one of the plurality of ADS features;
activating (S109) the sensor hardware for data collection in accordance with the generated arbitration signal.

2. The method (S100) according to claim 1, wherein the step of obtaining data indicative of a predicted scene or scenario comprises:
obtaining (S118) route data indicative of a geographical position of the vehicle at the future point in time;
obtaining (S106) scene data indicative of at least one of a weather forecast, a time of day, one or more traffic conditions, and one or more environmental conditions at the geographical position at the future moment in time;
predicting (S107) the scene or scenario in the surrounding environment of the vehicle that the vehicle is expected to be exposed to at the future moment in time based on the obtained route data and scene data.

3. The method (S100) according to claim 1 or 2, further comprising:
evaluating (S108) the predicted scene or scenario in order to determine a score indicative of a potential development gain of using at least a portion of output data generated by the activated sensor hardware at the predicted scene or scenario as input for each of the plurality of ADS features;
wherein the step of generating (S105) the arbitration signal further comprises:
generating, based on the platform constraints and the set of requirements, the arbitration signal indicative of the sensor hardware activation and a resource allocation of the platform of the vehicle for at least one of the plurality of ADS features in accordance with the determined score and the priority scheme.

4. The method (S100) according to claim 3, wherein the step of evaluating (S108) the predicted scene or scenario is performed by means of a heuristic algorithm.

5. The method (S100) according to claim 3, wherein the step of evaluating (S108) the predicted scene or scenario is performed by means of a clustering algorithm.

6. The method (S100) according to claim 5, wherein the step of evaluating (S108) the predicted scene or scenario comprises:
processing, by means of the clustering algorithm, the predicted scene or scenario in order to place the predicted scene or scenario in a clustering space, wherein the clustering space is indicative of sub-clusters formed based on a set of predefined evaluation conditions for each ADS feature of the plurality of ADS features;
determining the score indicative of the potential development gain based on a position of the placed predicted scene or scenario in the clustering space relative to each sub-cluster.

7. The method (S100) according to any one of claims 1 - 6, further comprising:
storing (S110), during a time period, a first set of sensor data generated by the activated sensor hardware;
based on the resource allocation indicated by the arbitration signal, performing at least one of:
transmitting (S111) at least a portion of the first set of sensor data to a remote entity for offline processing;
evaluating (S112), in accordance with the resource allocation, an output of at least one ADS feature using at least a portion of first set of sensor data as input; and
updating (S113), in accordance with the resource allocation, at least one ADS feature using at least one portion of the first set of sensor data as input.

8. The method (S100) according to claim 7, further comprising:
storing (S114), during a time period, a second set of sensor data generated by platform-native sensors of the vehicle;
based on the resource allocation indicated by the arbitration signal, performing at least one of:
transmitting (S115) at least a portion of the second set of sensor data to a remote entity for offline processing;
evaluating (S116), in accordance with the resource allocation, an output of at least one ADS feature using at least a portion of second set of sensor data as input; and
updating (S117), in accordance with the resource allocation, at least one ADS feature using at least one portion of the second set of sensor data as input.

9. The method (S100) according to any one of claims 1 - 8, wherein the set of platform constraints (121) include at least one of, available power, available computational power, available data storage capacity, and available bandwidth for data transmission.

10. The method (S100) according to any one of claims 1 - 9, wherein the set of requirements (123) for each of the plurality of ADS features comprises an estimated power consumption, an estimated computational resource need, an estimated data storage need, and an estimated bandwidth need.

11. A computer-readable storage medium storing one or more programs configured to be executed by one or more processors of an in-vehicle processing system, the one or more programs comprising instructions for performing the method according to any one of claims 1 - 10.

12. A system (10) for prioritized activation of sensor hardware of a vehicle (1) for development, evaluation, and/or testing of Automated Driving System, ADS, features, the system comprising:
an arbitration module (127) configured to:
obtain data indicative of a set of platform constraints (121) of the vehicle;
obtain data indicative of a set of requirements (123) for each of a plurality of ADS features;
obtain data indicative of a priority scheme (122) for the plurality of ADS features, wherein the priority scheme (122) comprises a predefined development priority of each ADS feature relative to the other ADS features of the plurality of ADS features;
obtain data indicative of a predicted scene or scenario (40) in the surrounding environment of the vehicle that the vehicle (1) is expected to be exposed to at a future moment in time;
generate, based on the platform constraints, the set of requirements, the priority scheme and the predicted scene or scenario, an arbitration signal indicative of a sensor hardware activation and a resource allocation of the platform of the vehicle for at least one of the plurality of ADS features;
a control module (140) configured to:
activate the sensor hardware (150, 150a-N) for data collection in accordance with the generated arbitration signal.

13. A vehicle (1) comprising:
one or more sensors (150, 150a-N) configured to monitor a surrounding environment of the vehicle;
a system (10) according to claim 12.

## Patentansprüche

1. Verfahren (S100) zur priorisierten Aktivierung von Sensorhardware eines Fahrzeugs zur Entwicklung, Bewertung und/oder Erprobung von Eigenschaften eines automatisierten Fahrsystems, ADS, wobei das Verfahren Folgendes umfasst:
Erlangen (S101) von Daten, die einen Satz von Plattformbeschränkungen des Fahrzeugs angeben;
Erlangen (S102) von Daten, die einen Satz von Anforderungen für jede einer Vielzahl von ADS-Eigenschaften angeben;
Erlangen (S103) von Daten, die ein Prioritätsschema für die Vielzahl von ADS-Eigenschaften angeben, wobei das Prioritätsschema (122) eine vordefinierte Entwicklungspriorität jeder ADS-Eigenschaft relativ zu den anderen ADS-Eigenschaften der Vielzahl von ADS-Eigenschaften umfasst;
Erlangen (S104) von Daten, die ein/e vorhergesagte/s Szene oder Szenario in der umliegenden Umgebung des Fahrzeugs angeben, der/dem das Fahrzeug voraussichtlich zu einem zukünftigen Zeitpunkt ausgesetzt sein wird;
Erzeugen (S105), basierend auf den Plattformbeschränkungen, dem Satz von Anforderungen, dem Prioritätsschema und der/dem vorhergesagten Szene oder Szenario, eines Arbitrierungssignals, das eine Sensorhardwareaktivierung angibt, und einer Ressourcenzuweisung der Plattform des Fahrzeugs für mindestens eine der Vielzahl von ADS-Eigenschaften;
Aktivieren (S109) der Sensorhardware zur Datenerfassung gemäß dem erzeugten Arbitrierungssignal.

2. Verfahren (S100) nach Anspruch 1, wobei der Schritt des Erlangens von Daten, die ein/e vorhergesagte/s Szene oder Szenario angeben, Folgendes umfasst:
Erlangen (S118) von Routendaten, die eine geografische Position des Fahrzeugs zu dem zukünftigen Zeitpunkt angeben;
Erlangen (S106) von Szenendaten, die mindestens eines von einer Wettervorhersage, einer Tageszeit, einer oder mehreren Verkehrsbedingungen und einer oder mehreren Umgebungsbedingungen an der geografischen Position zu dem zukünftigen Zeitpunkt angeben;
Vorhersagen (S107) der/des Szene oder Szenarios in der umliegenden Umgebung des Fahrzeugs, der/dem das Fahrzeug voraussichtlich zu dem zukünftigen Zeitpunkt ausgesetzt sein wird, basierend auf den erlangten Routendaten und Szenendaten.

3. Verfahren (S100) nach Anspruch 1 oder 2, ferner umfassend:
Bewerten (S108) der/des vorhergesagten Szene oder Szenarios, um eine Wertung zu bestimmen, die einen potenziellen Entwicklungsgewinn angibt, wenn mindestens ein Teil von Ausgabedaten verwendet wird, die durch die aktivierte Sensorhardware in der/dem vorhergesagten Szene oder Szenario als Eingabe für jede der Vielzahl von ADS-Eigenschaften erzeugt werden;
wobei der Schritt des Erzeugens (S105) des Arbitrierungssignals ferner Folgendes umfasst:
Erzeugen, basierend auf den Plattformbeschränkungen und dem Satz von Anforderungen, des Arbitrierungssignals, das die Sensorhardwareaktivierung angibt, und einer Ressourcenzuweisung der Plattform des Fahrzeugs für mindestens eine der Vielzahl von ADS-Eigenschaften gemäß der bestimmten Wertung und dem Prioritätsschema.

4. Verfahren (S100) nach Anspruch 3, wobei der Schritt des Bewertens (S108) der/des vorhergesagten Szene oder Szenarios mittels eines heuristischen Algorithmus durchgeführt wird.

5. Verfahren (S100) nach Anspruch 3, wobei der Schritt des Bewertens (S108) der/des vorhergesagten Szene oder Szenarios mittels eines Clusteralgorithmus durchgeführt wird.

6. Verfahren (S100) nach Anspruch 5, wobei der Schritt des Bewertens (S108) der/des vorhergesagten Szene oder Szenarios Folgendes umfasst:
Verarbeiten, mittels des Clusteralgorithmus, der/des vorhergesagten Szene oder Szenarios, um die/das vorhergesagte Szene oder Szenario in einem Clustering-Raum zu platzieren, wobei der Clustering-Raum Untercluster angibt, die basierend auf einem Satz von vordefinierten Bewertungsbedingungen für jede ADS-Eigenschaft der Vielzahl von ADS-Eigenschaften gebildet wurden;
Bestimmen der Wertung, die den potenziellen Entwicklungsgewinn basierend auf einer Position der/des platzierten vorhergesagten Szene oder Szenarios in dem Clustering-Raum relativ zu jedem Untercluster angibt.

7. Verfahren (S100) nach einem der Ansprüche 1-6, ferner umfassend:
Speichern (S110), während eines Zeitraums, eines ersten Satzes von Sensordaten, die durch die aktivierte Sensorhardware erzeugt werden;
basierend auf der durch das Arbitrierungssignal angegebenen Ressourcenzuweisung, Durchführen von mindestens einem von:
Übertragen (S111) von mindestens einem Teil des ersten Satzes von Sensordaten an eine entfernt gelegene Entität zur Offline-Verarbeitung;
Bewerten (S112), gemäß der Ressourcenzuweisung, einer Ausgabe von mindestens einer ADS-Eigenschaft unter Verwendung von mindestens einem Teil von einem ersten Satz von Sensordaten als Eingabe; und
Aktualisieren (S113), gemäß der Ressourcenzuweisung, von mindestens einer ADS-Eigenschaft unter Verwendung von mindestens einem Teil des ersten Satzes von Sensordaten als Eingabe.

8. Verfahren (S100) nach Anspruch 7, ferner umfassend:
Speichern (S114), während eines Zeitraums, eines zweiten Satzes von Sensordaten, die durch plattformnative Sensoren des Fahrzeugs erzeugt werden;
basierend auf der durch das Arbitrierungssignal angegebenen Ressourcenzuweisung, Durchführen von mindestens einem von:
Übertragen (S115) von mindestens einem Teil des zweiten Satzes von Sensordaten an eine entfernt gelegene Entität zur Offline-Verarbeitung;
Bewerten (S116), gemäß der Ressourcenzuweisung, einer Ausgabe von mindestens einer ADS-Eigenschaft unter Verwendung von mindestens einem Teil von einem zweiten Satz von Sensordaten als Eingabe; und
Aktualisieren (S117), gemäß der Ressourcenzuweisung, von mindestens einer ADS-Eigenschaft unter Verwendung von mindestens einem Teil des zweiten Satzes von Sensordaten als Eingabe.

9. Verfahren (S100) nach einem der Ansprüche 1-8, wobei der Satz von Plattformbeschränkungen (121) mindestens eines von verfügbarer Leistung, verfügbarer Rechenleistung, verfügbarer Datenspeicherkapazität und verfügbarer Bandbreite zur Datenübertragung beinhaltet.

10. Verfahren (S100) nach einem der Ansprüche 1-9, wobei der Satz von Anforderungen (123) für jede der Vielzahl von ADS-Eigenschaften einen geschätzten Leistungsverbrauch, einen geschätzten Bedarf an Rechenressourcen, einen geschätzten Bedarf an Datenspeicherung und einen geschätzten Bandbreitenbedarf umfasst.

11. Computerlesbares Speichermedium, das ein oder mehrere Programme speichert, die dazu konfiguriert sind, durch einen oder mehrere Prozessoren eines fahrzeuginternen Verarbeitungssystems ausgeführt zu werden, wobei das eine oder die mehreren Programme Anweisungen zum Durchführen des Verfahrens nach einem der Ansprüche 1-10 umfassen.

12. System (10) zur priorisierten Aktivierung von Sensorhardware eines Fahrzeugs (1) zur Entwicklung, Bewertung und/oder Erprobung von Eigenschaften eines automatisierten Fahrsystems, ADS, wobei das System Folgendes umfasst:
ein Arbitrierungsmodul (127), das zu Folgendem konfiguriert ist:
Erlangen von Daten, die einen Satz von Plattformbeschränkungen (121) des Fahrzeugs angeben;
Erlangen von Daten, die einen Satz von Anforderungen (123) für jede einer Vielzahl von ADS-Eigenschaften angeben;
Erlangen von Daten, die ein Prioritätsschema (122) für die Vielzahl von ADS-Eigenschaften angeben, wobei das Prioritätsschema (122) eine vordefinierte Entwicklungspriorität jeder ADS-Eigenschaft relativ zu den anderen ADS-Eigenschaften der Vielzahl von ADS-Eigenschaften umfasst;
Erlangen von Daten, die ein/e vorhergesagte/s Szene oder Szenario (40) in der umliegenden Umgebung des Fahrzeugs angeben, der/dem das Fahrzeug (1) voraussichtlich zu einem zukünftigen Zeitpunkt ausgesetzt sein wird;
Erzeugen, basierend auf den Plattformbeschränkungen, dem Satz von Anforderungen, dem Prioritätsschema und der/dem vorhergesagten Szene oder Szenario, eines Arbitrierungssignals, das eine Sensorhardwareaktivierung angibt, und einer Ressourcenzuweisung der Plattform des Fahrzeugs für mindestens eine der Vielzahl von ADS-Eigenschaften;
ein Steuermodul (140), das zu Folgendem konfiguriert ist:
Aktivieren der Sensorhardware (150, 150a-N) zur Datenerfassung gemäß dem erzeugten Arbitrierungssignal.

13. Fahrzeug (1), umfassend:
einen oder mehrere Sensoren (150, 150a-N), die dazu konfiguriert sind, eine umliegende Umgebung des Fahrzeugs zu überwachen;
ein System (10) nach Anspruch 12.

## Revendications

1. Procédé (S100) pour l'activation priorisée de matériel de capteur d'un véhicule pour le développement, l'évaluation, et/ou les tests de caractéristiques de système de conduite autonome, ADS, le procédé comprenant :
l'obtention (S101) de données indicatives d'un ensemble de contraintes de plateforme du véhicule ;
l'obtention (S102) de données indicatives d'un ensemble d'exigences pour chacune d'une pluralité de caractéristiques ADS ;
l'obtention (S103) de données indicatives d'un schéma de priorité pour la pluralité de caractéristiques ADS, dans lequel le schéma de priorité (122) comprend une priorité de développement prédéfinie de chaque caractéristique ADS par rapport aux autres caractéristiques ADS de la pluralité de caractéristiques ADS ;
l'obtention (S104) de données indicatives d'une scène ou d'un scénario prédit dans l'environnement environnant du véhicule auquel le véhicule est censé être exposé à un moment futur dans le temps ;
la génération (S105), en fonction des contraintes de plateforme, de l'ensemble d'exigences, du schéma de priorité et de la scène ou du scénario prédit, d'un signal d'arbitrage indicatif d'une activation de matériel de capteur et d'une allocation de ressources de la plateforme du véhicule pour au moins l'une de la pluralité de caractéristiques ADS ;
l'activation (S109) du matériel de capteur pour la collecte de données conformément au signal d'arbitrage généré.

2. Procédé (S100) selon la revendication 1, dans lequel l'étape d'obtention de données indicatives d'une scène ou d'un scénario prédit comprend :
l'obtention (S118) de données d'itinéraire indicatives d'une position géographique du véhicule au point futur dans le temps ;
l'obtention (S106) de données de scène indicatives d'au moins un élément parmi des prévisions météorologiques, une heure de la journée, un ou plusieurs éléments de conditions de circulation, et un ou plusieurs éléments de conditions environnementales à la position géographique au moment futur dans le temps ;
la prédiction (S107) de la scène ou du scénario dans l'environnement environnant du véhicule auquel le véhicule est censé être exposé au moment futur dans le temps en fonction des données d'itinéraire et des données de scène obtenues.

3. Procédé (S100) selon la revendication 1 ou 2, comprenant en outre :
l'évaluation (S108) de la scène ou du scénario prédit afin de déterminer un score indicatif d'un gain de développement potentiel lié à l'utilisation d'au moins une partie de données de sortie générées par le matériel de capteur activé au niveau de la scène ou du scénario prédit comme entrée pour chacune de la pluralité de caractéristiques ADS ;
dans lequel l'étape de génération (S105) du signal d'arbitrage comprend en outre :
la génération, en fonction des contraintes de plateforme et de l'ensemble d'exigences, du signal d'arbitrage indicatif de l'activation de matériel de capteur et d'une allocation de ressources de la plateforme du véhicule pour au moins l'une de la pluralité de caractéristiques ADS conformément au score déterminé et au schéma de priorité.

4. Procédé (S100) selon la revendication 3, dans lequel l'étape d'évaluation (S108) de la scène ou du scénario prédit est réalisée au moyen d'un algorithme heuristique.

5. Procédé (S100) selon la revendication 3, dans lequel l'étape d'évaluation (S108) de la scène ou du scénario prédit est réalisée au moyen d'un algorithme de regroupement.

6. Procédé (S100) selon la revendication 5, dans lequel l'étape d'évaluation (S108) de la scène ou du scénario prédit comprend :
le traitement, au moyen de l'algorithme de regroupement, de la scène ou du scénario prédit afin de placer la scène ou le scénario prédit dans un espace de regroupement, dans lequel l'espace de regroupement est indicatif de sous-groupes formés en fonction d'un ensemble de conditions d'évaluation prédéfinies pour chaque caractéristique ADS de la pluralité de caractéristiques ADS ;
la détermination du score indicatif du gain de développement potentiel en fonction d'une position de la scène ou du scénario prédit placé dans l'espace de regroupement par rapport à chaque sous-groupe.

7. Procédé (S100) selon l'une quelconque des revendications 1 à 6, comprenant en outre :
le stockage (S110), pendant une période de temps, d'un premier ensemble de données de capteur générées par le matériel de capteur activé ;
en fonction de l'allocation de ressources indiquée par le signal d'arbitrage, la réalisation d'au moins un élément parmi :
la transmission (S111) d'au moins une partie du premier ensemble de données de capteur à une entité distante pour un traitement hors ligne ;
l'évaluation (S112), conformément à l'allocation de ressources, d'une sortie d'au moins une caractéristique ADS utilisant au moins une partie du premier ensemble de données de capteur comme entrée ; et
la mise à jour (S113), conformément à l'allocation de ressources, d'au moins une caractéristique ADS utilisant au moins une partie du premier ensemble de données de capteur comme entrée.

8. Procédé (S100) selon la revendication 7, comprenant en outre :
le stockage (S114), pendant une période de temps, d'un second ensemble de données de capteur générées par des capteurs natifs de la plateforme du véhicule ;
en fonction de l'allocation de ressources indiquée par le signal d'arbitrage, la réalisation d'au moins un élément parmi :
la transmission (S115) d'au moins une partie du second ensemble de données de capteur à une entité distante pour un traitement hors ligne ;
l'évaluation (S116), conformément à l'allocation de ressources, d'une sortie d'au moins une caractéristique ADS utilisant au moins une partie du second ensemble de données de capteur comme entrée ; et
la mise à jour (S117), conformément à l'allocation de ressources, d'au moins une caractéristique ADS utilisant au moins une partie du second ensemble de données de capteur comme entrée.

9. Procédé (S100) selon l'une quelconque des revendications 1 à 8, dans lequel l'ensemble de contraintes de plateforme (121) comprend au moins un élément parmi une puissance disponible, une puissance de calcul disponible, une capacité de stockage de données disponible, et une bande passante disponible pour la transmission de données.

10. Procédé (S100) selon l'une quelconque des revendications 1 à 9, dans lequel l'ensemble d'exigences (123) pour chacune de la pluralité de caractéristiques ADS comprend une consommation de puissance estimée, un besoin en ressources de calcul estimé, un besoin en stockage de données estimé, et un besoin en bande passante estimé.

11. Support de stockage lisible par ordinateur stockant un ou plusieurs éléments de programmes configurés pour être exécutés par un ou plusieurs éléments de processeurs d'un système de traitement embarqué, les un ou plusieurs éléments de programmes comprenant des instructions pour réaliser le procédé selon l'une quelconque des revendications 1 à 10.

12. Système (10) pour l'activation priorisée de matériel de capteur d'un véhicule (1) pour le développement, l'évaluation, et/ou les tests de caractéristiques de système de conduite autonome, ADS, le système comprenant :
un module d'arbitrage (127) configuré pour :
obtenir des données indicatives d'un ensemble de contraintes de plateforme (121) du véhicule ;
obtenir des données indicatives d'un ensemble d'exigences (123) pour chacune d'une pluralité de caractéristiques ADS ;
obtenir des données indicatives d'un schéma de priorité (122) pour la pluralité de caractéristiques ADS, dans lequel le schéma de priorité (122) comprend une priorité de développement prédéfinie de chaque caractéristique ADS par rapport aux autres caractéristiques ADS de la pluralité de caractéristiques ADS ;
obtenir des données indicatives d'une scène ou d'un scénario prédit (40) dans l'environnement environnant du véhicule auquel le véhicule (1) est censé être exposé à un moment futur dans le temps ;
générer, en fonction des contraintes de plateforme, de l'ensemble d'exigences, du schéma de priorité et de la scène ou du scénario prédit, un signal d'arbitrage indicatif d'une activation de matériel de capteur et d'une allocation de ressources de la plateforme du véhicule pour au moins l'une de la pluralité de caractéristiques ADS ;
un module de commande (140) configuré pour :
activer le matériel de capteur (150, 150a-N) pour la collecte de données conformément au signal d'arbitrage généré.

13. Véhicule (1) comprenant :
un ou plusieurs éléments de capteurs (150, 150a-N) configurés pour surveiller un environnement environnant du véhicule ;
un système (10) selon la revendication 12.
